(19) Europäisches Patentamt
European Patent Office
Office européen des brevets

(11) EP 0 639 754 B1

# (12) EUROPEAN PATENT SPECIFICATION

(45) Date of publication and mention of the grant of the patent:
**27.01.1999 Bulletin 1999/04**

(21) Application number: **93916249.1**

(22) Date of filing: **02.08.1993**

(51) Int Cl.6: **G01B 21/20**, G01B 7/28, G02C 13/00

(86) International application number:
**PCT/JP93/01078**

(87) International publication number:
**WO 94/03777 (17.02.1994 Gazette 1994/05)**

## (54) FRAME SHAPE MEASURING INSTRUMENT

GESTELLKONTURMESSINSTRUMENT

INSTRUMENT POUR LA MESURE DES CONTOURS D'UNE MONTURE DE LUNETTE

(84) Designated Contracting States:
**DE FR GB IT NL**

(30) Priority: **31.07.1992 JP 204657/92**
**28.07.1993 JP 185701/93**

(43) Date of publication of application:
**22.02.1995 Bulletin 1995/08**

(73) Proprietor: **KABUSHIKI KAISHA TOPCON**
**Tokyo 174 (JP)**

(72) Inventor: **SUZUKI, Yasuo,**
**Kabushiki Kaisha Topcon**
**Tokyo 174 (JP)**

(74) Representative: **Poulin, Gérard et al**
**Société de Protection des Inventions**
**25, rue de Ponthieu**
**75008 Paris (FR)**

(56) References cited:

| | |
|---|---|
| EP-A- 0 160 985 | EP-A- 0 190 450 |
| EP-A- 0 238 877 | JP-A-57 142 510 |
| JP-A-61 267 732 | JP-A-64 000 409 |
| JP-A-64 000 513 | US-A- 4 995 170 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 639 754 B1

**Description**

SPECIFICATION

Technical Field

This invention relates to an apparatus for digitally measuring the shape of a spectacle frame lens rim or template copying the lens rim, and more particularly to a frame shape measuring apparatus which is suitable to be used together with a grinder for grinding a pre-edge spectacle lens in accordance with information of the shape of a lens rim or template.

Background Art

With respect to a frame shape measuring apparatus of the type mentioned above, there is known an apparatus in which a spectacle frame is held on a holding surface of a body of a frame holding apparatus with both eye portions pressed against the holding surface by a spring-biased holding bar, a bead-like feeler is moved contacting an inner side of a V-shaped groove of the spectacle frame, a moving locus of the feeler is three-dimensionally detected thereby to measure the shape of the spectacle frame.

It is also known from document EP-A-0 238 877 a frame shape measuring apparatus, in which a lens rim of a spectacle frame is held on the upper face of a support plate, rotatably received in a stationary ring. A vertical rod extending through an opening of the plate carries a finger at its upper end. Springs maintain the finger in a V-shaped groove formed in the lens rim, thanks to vertical translations of the rod in a support and thanks to horizontal translations of the support. Both translations are measured when the plate is rotated, to determine the shape of the rim.

In document EP-A-0 160 985, it is disclosed a method for calculating the relationship between a pre-edged lens and a spectacle frame, for use in a lens edging machine. A lens rim of a spectacle frame is mounted in a frame holding member, itself received on a frame holding apparatus. A detector is provided with a feeler adapted to engage a V-shaped groove formed in the lens rim. The detector measures the polar coordinates of the groove with respect to the geometric center of the lens rim.

Finally, document EP-A-0 190 450 describes a frame shape measuring apparatus according to the preamble of claim 1.

However, since the spectacle frame is generally curved, even if the lens rim is held by the holding bar with a bridge side for connecting the pair of lens rims allowed to contact the holding surface, a peripheral portion of the opposite side (that portion where a sidepiece, this being also served as an ear hunger, is to be attached) is held in a "floating state" on the holding surface and therefore, a reference measuring surface and the lens rim are inclined (frame inclination).

Since the inclination angle of the V-groove of the spectacle frame is not necessarily uniform, the inclination angle of the V-edge apex of a lens L is not equal to the inclination angle of the V-groove of the lens rim at some area. Therefore, a certain angle γ is occasionally formed between a plane including the V-edge apex of the lens L and the center line of the V-groove of the lens rim.

In order to measure a true dimension of the lens rim, as shown in Fig. 18, it is necessary to coincide the angle γ formed between the plane including the V-edge apex of the lens L and the center line of the V-shaped groove of the lens rim with an angle δ formed between a plane including the apex of the feeler and the center line of the V-shaped groove of the lens rim. However, the conventional apparatus has such problems that the angles γ and δ are not coincident with each other because of inclination of the curved lens rim, and if the lens is ground based on a wrong measured-data at the feeler apex position, the resultant lens L has an outer diameter of a dimension c of Fig. 14 and a measuring error occurs between a dimension d of a true outer diameter of a lens L' of Fig. 15 and the dimension c of the outer diameter of the resultant lens L. As a result, a true dimension of the spectacle frame shape cannot be measured correctly.

It is, therefore, an object of the present invention to provide, in order to resolve the above problems, a frame shape measuring apparatus which is capable of correctly measuring the shape of a curved spectacle frame.

Disclosure of Invention

According to the present invention, there is provided, in order to achieve the above object, a frame shape measuring apparatus as defined in claim 1.

The frame shape measuring apparatus according to the present invention may further comprise the features of claim 2.

Brief Description of Drawings

Fig. 1 is a perspective view showing a frame shape measuring apparatus according to the present invention.

Fig. 2 is a perspective view showing a relation between a frame holding apparatus of Fig. 1 and a spectacle.

Fig. 3 is an explanatory view of operation showing the frame holding apparatus of Figs. 1 and 2.

Fig. 4 is an explanatory view of operation showing a state in which a spectacle is held by the frame holding apparatus of Figs. 1 and 2.

Fig. 5 is a sectional view taken on line A-A of Fig. 2.

Fig. 6 is a sectional view of a spring member of Fig. 1.

Fig. 7 is a schematic view showing a relation between a supporting apparatus portion of Fig. 1 and a sensor portion.

Fig. 8 is a sectional view showing a relation between the supporting apparatus portion and the sensor portion of Fig. 7.

Fig. 9 is a front view, showing a part of the sensor portion of Figs. 1, 7 and 8 in section.

Fig. 10 is a schematic view for obtaining a geometric center from a measured value of a lens rim.

Fig. 11 is a perspective view showing a template holding member which is, in use, held by a hand of Fig. 1.

Fig. 12 is an arithmetic control block diagram of the frame shape measuring apparatus of Fig. 1.

Figs. 13(A) and 13(B) are explanatory views for calculating a curved value C of the lens rim.

Fig. 14 is an explanatory view showing a state in which a spectacle frame is preliminarily measured using the frame shape measuring apparatus of Fig. 1.

Fig. 15 is an explanatory view showing a state in which a spectacle frame is regularly measured using the frame shape measuring apparatus of Fig. 1.

Fig. 16 is an explanatory view showing the size of a finished lens obtained based on the regular measurement of Fig. 15.

Fig. 17 is a flow chart for explaining a frame shape measurement using the frame shape measuring apparatus of Fig. 1.

Fig. 18 is an explanatory view of a conventional frame shape measurement of a spectacle frame.

## Best Mode for Carrying Out the Invention

One embodiment of the present invention will be described in detail with reference to the drawings.

Fig. 1 is a perspective view showing a lens rim shape measuring apparatus according to the present invention. This apparatus comprises roughly three units, i.e., a frame holding apparatus unit 100(frame holding means) for simultaneously holding a pair of lens rims of a spectacle frame, a supporting apparatus unit 200 for supporting the frame holding apparatus unit 100 and undertaking a role for transferring the holding apparatus unit into a measuring surface and for moving the same within the measuring surface, and instrumental measuring unit 300 (measuring means) for digitally measuring the shape of a spectacle frame lens rim or template.

### <Frame Holding Apparatus Unit 100 (Frame Holding Means)>

As shown in Figs. 2 and 5, the frame holding apparatus unit 100 includes a stationary base 150, and this stationary base 150 has, on opposite sides thereof, flanges 151 and 151 which are provided with sides 151a and 151a, respectively.

Each flange 151 is provided with a pair of frame holding bars 152 and 152 longitudinally arranged thereon with a space and secured thereto by a screw. The frame holding bars 152 and 152 of the flanges 151 and 151 are coaxially opposite to each other with a space.

A movable base 153 having sides 153a and 153a is inserted between a bottom plate 150a of the stationary base 150 and the flange 151. The movable base 153 is supported by two plate springs 154 and 154 mounted on the bottom plate 150a.

Two guide grooves 155 and 155 are formed in the movable base 153 in such a manner as to be in a parallel relation. Projections 156a and 156a of sliders 156 and 156 are engaged in the guide grooves 155 and 155, respectively, and the sliders 156 and 156 are slidably fitted in the movable base 153.

On the other hand, round openings 157 and 157 are formed lengthwise in opposite sides of the movable base 153, and a ring 158 is rotatably fitted in an inner periphery of each round opening 157. Two pins 159 and 159 are implanted in an upper surface of the ring 158. Each of the pins 159 and 159 is inserted in a slot 156c formed in each of stepped portions 156b and 156b (holding surfaces) of the sliders 156 and 156.

Vertical cut portions 156d and 156d are formed in center areas of the sliders 156 and 156, respectively. The frame holding bars 152 and 152 can be inserted in the cut portions 156d and 156d, respectively. Hole portions 156e and 156e are formed in upper surfaces of the sliders 156 and 156, respectively, so that an operator can easily operate by inserting the fingers therein when the sliders 156 and 156 are operated.

### <Supporting Apparatus Unit 200>

The supporting apparatus unit 200 has guide rails 202a and 202b which are laid in a parallel relation on a housing 201 (apparatus body) in a vertical direction (X-axis direction of a measuring coordinate system). A moving stage 203 is slidably placed on the guide rails. A female threaded portion 204 is formed in a lower surface of the moving stage 203. An X-axis feed screw 205 is threadedly engaged with this female threaded portion 204. The X-axis feed screw 205 is rotated by an X-axis motor 206 comprising a pulse motor.

A guide shaft 208 is disposed in parallel with a Y-axis direction of a measuring coordinate system between opposite side flanges 207a and 207b of the moving stage 203. This guide shaft 208 can be rotated by a guide shaft motor 209 (rotational drive means) mounted on the flange 207a. A guide groove 210 is formed in an outer surface of the guide shaft 208 in such a manner as to be in parallel relation. A horizontal plane including a center line of the guide shaft 208 is served as a reference measuring surface SO.

Hands 211 and 212 are longitudinally slidably supported by the guide shaft 208. Raised portions 213a and 214a are formed in shaft holes 213 and 214 of the hands 211 and 212, respectively. The raised portions 213a and 214a are engaged in the guide groove 210 of the guide shaft 208 in order to prohibit the hands 211 and 212 from rotating about the guide shaft 208.

The hand 211 has two inclination surfaces 215 and 216 intersecting each other, and the hand 212 also has two inclination surfaces 217 and 218 intersecting each other. A ridge 220 defined by the two inclination surfaces 217 and 218 of the hand 212 is in parallel to and coplanar with a ridge 219 which is defined by the inclination surfaces 215 and 216 of the hand 211. An angle formed between the inclination surfaces 217 and 218 is equal to an angle formed between the inclination surfaces 215 and 216. As shown in Fig. 8, a spring 230 is disposed between the two hands 211 and 212.

With this construction, by holding the frame holding apparatus unit 100 between the hands 211 and 212 and rotating the guide shaft 208 with the guide shaft motor 209, the hands 211 and 212 and the frame holding apparatus unit 100 are vertically rotated in an inclined state relative to the reference measuring surface SO.

A pulley 222 is rotatably supported on one end of a rear side flange 221 of the moving stage 203, and a Y-axis motor 224 having a pulley 223 is mounted on the other end of the rear side flange 221. A miniature belt 226 provided with a spring 225 is disposed between the pulleys 222 and 223. Opposite ends of the miniature belt 226 are secured by a pin 227 implanted in an upper surface of the hand 211.

On the other hand, a collar 228 is formed on an upper surface of the hand 212. This collar 228 is brought into abutment with a side surface of a pin 229 implanted in the rear side flange 221 of the moving stage 208 in accordance with the movement of the hand 212.

<Instrumental Measuring Unit 300 (Measuring Means)>

The instrumental measuring unit 300 acting as a measuring means includes a sensor arm rotary motor 301 mounted on a lower surface of the housing 201, a sensor arm portion 302 rotatably supported on an upper surface of the housing 201, a pulley 303 mounted on a rotary shaft of the sensor arm motor 301, a rotary shaft 304 of the sensor arm portion 302, and a belt 305 disposed between the pulley 303 and the rotary shaft 304. Owing to this arrangement, rotation of the motor 301 is transmitted to the sensor arm.

The sensor arm portion 302 includes a base 310 having raised plate portions 310a and 310b lengthwise on opposite ends thereof, two parallel rails 311 and 311 bridged between the raised plate portions 310a and 310b, a sensor head portion 312 movably mounted on the rails 311 and 311 for movement in a longitudinal direction thereof, a magnetic scale reading head 313 mounted on a side surface of the sensor head portion 312, a magnetic scale 314 mounted in parallel to the rail 311, and a spring apparatus 315 for normally pulling the sensor head portion 312 to a side surface of one end of the arm. The scale reading head 313 is operated to read the magnetic scale 314 to detect an amount of movement of the sensor head portion 312.

(Spring Apparatus 315)

Fig. 6 shows a construction of the spring apparatus 315. The spring apparatus 315 includes a casing 317 mounted on the raised plate portion 310a of the base 310, an electromagnet 318 disposed within the casing 317, and a slide shaft 319 slidably fitted in a shaft hole of the electromagnet 318 for sliding motion in an axial direction thereof. The slide shaft 319 is allowed to extend in a direction perpendicular to the rail 311.

This slide shaft 319 is provided with collars 320 and 321. A tension spring 323 is interposed between the collar 320 and the casing 317 so that the slide shaft 319 is normally biased leftwardly.

Clutch plates 324 and 325 are rotatably supported on one end portion of the slide shaft 319, and a spiral spring 316 wound around the slide shaft 319 is disposed between clutch plates 324 and 325. This spiral spring 316, whose one end is fixed to the clutch plate 324 and whose the other end is fixed to the sensor head portion 312, is adapted to bias the sensor head portion 312 toward the raised plate portion 310a.

A compression spring 326, which is wound around the slide shaft 319, is interposed between the clutch plates 324 and 325. This compression spring 326 is adapted to normally spread a distance between the clutch plates 324 and 325 so that the spiral spring 316 and the clutch plate 325 are prevented from contacting each other. A washer 327 is attached to one end portion of the slide shaft 319.

(Sensor Head Portion 312)

The sensor head portion 312 of Fig. 9 includes a slider 350 movably supported on the rail 311 for movement in a longitudinal direction thereof. A shaft hole 351 is vertically formed in the slider 350. A sensor shaft 352 is inserted in this shaft hole 351, and a ball bearing 353 held by the sensor shaft 352 is interposed between the sensor shaft 352 and the shaft hole 351. This arrangement enhances not only a smooth rotation of the sensor shaft 352 about the vertical axis but also a smooth movement thereof in the vertical direction.

The sensor shaft 352 is provided at an upper portion thereof with a half-moon like cut. A template abutting surface 354 defining this cut surface constitutes a template feeler which is brought into abutment with a template side surface at the time the shape of a template, which was obtained by copying the spectacle frame lens rim shape, is instrumentally measured. An arm 355 is mounted on the center of the sensor shaft 352. A bead like V-edge (or bevel) feeler 356 to be abutted with the V-shaped groove of the lens rim is movably supported on an upper portion of the arm 355. Both of the cut surface or template abutting surface 354 and a circumferential point of the V-edge feeler 356 are located on the center line of the vertical sensor shaft 352.

Interposed between a lower portion of the slider 350 and a lower portion of the sensor shaft 352 is a sensor 358 comprising, for example, a magnetic scale adapted to instrumentally measure an amount of movement in a vertical direction or Z-axis direction of the sensor shaft 352. The sensor 358 comprises a reading head 359 mounted on a lower portion of the slider 350, and a magnetic scale 360 mounted on a lower portion of the sensor shaft 352.

Pins 352a and 352a are integrally formed with a lower end portion of the magnetic scale 360 and allowed to project in a direction perpendicular to the bending direction of the arm 355 and parallel to the template abutting surface 354. The pins 352a and 352a are resiliently contacted with a hunger 310h formed of a plate spring which is secured to the base 310, so that the arm 355, the V-edge feeler 356 and the template mounting surface 314 face the moving direction of the slider 350.

Operation of the above-mentioned frame shape instrumental measuring apparatus is controlled by an arithmetic control circuit 600 of Fig. 12. The construction and function, as well as operation, of the arithmetic control circuit 600 will now be described with reference to Figs. 1 to 17.

In the arithmetic control circuit 600, when the frame holding apparatus 100 holding a spectacle frame 500 is mounted on the hands 211 and 212 and the feeler 356 is brought into abutment with a V-shaped groove 502 of the lens rim 501 of the spectacle frame 500, a preliminary measurement is executed in Step 1 of Fig. 17 to obtain a radius vector information ($\rho_n$, $\theta_n$). Thereafter, in Step 2, the inclination of the V-shaped groove 502 at the instrumentally measured portion is adjusted based on the radius vector information ($\rho_n$, $\theta_n$) obtained by the preliminary measurement, and then, in Step 3, a regular measurement is executed to finish the procedure. The frame holding and Steps 1 to 3 will be described hereinafter.

[Frame Holding]

First, fingers are inserted in the hole portions 156c and 156c of the sliders 156 and 156 of Fig. 2 to spread sufficiently the space between the sliders 156 and 156, and press the sliders 156 and 156 downwardly against the resilient force of the plate springs 154 and 154 from the state of Fig. 5 to the state of Fig. 3, so that the spaces between the holding bars 152 and the stepped portions 156b and 156b of the sliders 156 and 156.

Thereafter, the lens rim 501, which is to be measured, of the spectacle frame 500 is inserted into this space, and the space between the sliders 156 and 156 is narrowed so that upper and lower rims of the lens rim 501 are brought into abutment with inner walls of the sliders 156 and 156.

In this embodiment, since the sliders 156 and 156 include a connecting mechanism formed of the ring 158 as mentioned above, an amount of movement of one of the sliders 156 and 156 gives an equal amount of movement directly to the other slider 156.

After the frame is caused to slip in so that a generally center portion of the upper rim of the lens rim 501 will brought under the holding bar 152, the operator removes the hand from the sliders 156 and 156. By this, the movable base 153 is ascended by the resilient force of the plate springs 154 and 154, and the lens rims 501 are sandwiched between the stepped portions 156b and 156b and the holding bars 152 and 152, respectively, as shown in Figs. 4 and 7. At that time, the frame 500 is held in such a manner that a general geometric center point of the lens rim 501 is generally coincident with a center point 157a of a round opening 157 of the frame holding apparatus 100.

At that time, a distance d from the V-shaped groove apex 501 of the lens rim 501 to the side 151a of the flange 151 of the stationary base 150 is equal to a distance d from the V-shaped groove apex 501a to the side 153a of the movable base 153.

Next, after the frame holding apparatus unit 100 thus holding the frame 500 is inserted between the hands 211 and 212 which are preliminarily set to a predetermined space of the supporting apparatus 200, the Y-axis motor 224 is rotated by a predetermined angle. Rotation of the Y-axis motor 224 activates the miniature belt 226. As a result, the hand 211 is moved leftwardly by a predetermined amount. The frame holding apparatus unit 100 and the hand 212 are also caused to move leftwardly, so that the collar 228 is disengaged from the pin 229.

At the same time, as shown in Fig. 8, the frame holding apparatus unit 100 is sandwiched between the hands 211 and 212 under the effect of the tension spring 230. At that time, the sides 151a and 151a of the flange 151 of the stationary base 150 of the frame holding apparatus unit 100 are brought into abutment with the inclination surface 215 of the hand 211 and the inclination surface 217 of the hand 212, respectively, while the opposite sides 153a and 153a of the movable base 153 are brought into abutment with the inclination surface 216 of the hand 211 and the inclination surface 218 of the hand 212, respectively.

In this embodiment, since the distance d from the V-shaped groove apex 501a of the spectacle frame 501 to the side 151a is equal to the distance d from the apex 501a to the side 153a as mentioned above, if the frame holding apparatus 100 is sandwiched between the hands 211 and 212, the V-shaped groove apex 501a of the lens rim 501 is automatically located on the reference surface S which is defined by the ridges 219 and 220 of the hands 211 and 212.

Next, rotation of the guide shaft rotary motor 209 by a predetermined angle causes the frame holding apparatus unit 100 to be turned to a position as indicated by two-dots oblique line of Fig. 7 and the reference surface S is stopped in a same plane as the initial position (reference measuring surface SO) of the V-edge feeler 356 of the instrumental measuring unit 300.

Then, the Y-axis motor 224 is further rotated to move the hands 211 and 212 holding the frame holding apparatus unit 100 in the Y-axis direction by a predetermined amount so that a center point 159a of the round opening of the frame holding apparatus unit 100 will be generally coincident with the center of the rotary shaft 304 of the instrumental measuring unit 300. At that time, the V-edge feeler 356 is brought into abutment with the V-shaped groove of the lens rim 501.

As shown in Figs. 7 and 8, the initial position of the V-edge feeler 356 is restricted in its direction by the pin 352a which is implanted in a lower end of the sensor shaft 352 and the hunger 310h mounted on the base 310 of the sensor arm portion. Owing to this arrangement, when the spectacle frame 500 is moved in accordance with the rotation of the Y-axis motor 224, the feeler 356 can always brought into the V-shaped groove.

Then, the arithmetic control circuit 600 is operated to select one of the measuring modes, i.e., both eyes or a single eye measuring mode. If the single eye measuring mode is selected, the procedure of judgment in Step 5 of Fig. 17 is omitted. On the other hand, if the both eyes measuring mode is selected, the procedure for judging whether or not "the other eye" is to be measured is executed. The following description is based on an assumption that the both eyes measuring mode is selected.

Step 1

[Preliminary Measurement]

(Measurement of Radius Vector Length $\rho_n$ Relative to Angle $\theta_n$ of Rotation)

When the measurement is started as a result of selection of the both eyes measuring mode, a preliminary measurement of the selected lens rim 501 of the spectacle frame 500 is started in Step 1 of Fig. 17. In this preliminary measuring procedure, the arithmetic control circuit 600 is first operated to rotate the motor 301 every predetermined unit rotational pulse number. By doing this, the sensor head portion 312 is caused to move on the rails 311 and 311 in accordance with the shape of the spectacle frame 500, i.e. radius vector of the lens rim 501, and the amount of movement of the sensor head portion 312 is read by the magnetic scale 314 and the reading head 313. As a result, the lens rim shape is instrumentally measured as ($\rho_n$, $\theta_n$) (n=1, 2, 3 ··· N) from the angle $\theta$ of rotation of the motor 301 and the read angle $\rho$ of the reading head 313.

It is noted here that the above instrumental measurement is made under the condition that the center O of the rotary shaft 304 is generally coincident with the geometric center of the lens rim 501 as shown in Fig. 10.

After the above-mentioned instrumental measurement is made, the instrumentally measured data ($\rho_n$, $\theta_n$) is converted from the polar coordinates to orthogonal coordinates. From the data thus converted, the four points to be instrumentally measured are selected; a point $\underline{B}$ ($x_b$, $y_b$) having the maximum value in the X-axis direction, a point $\underline{D}$ ($x_d$, $y_d$) having the minimum value in the X-axis direction, a point $\underline{A}$ ($x_a$, $y_a$) having the maximum value in the Y-axis direction, and a point $\underline{C}$ ($x_c$, $y_c$) having the minimum value in the Y-axis direction. Then, the geometric center $O_\emptyset$ of the lens rim is obtained from the following equation.

$$O_\emptyset(x_\emptyset, y_\emptyset)=((x_b+x_d)/2, (y_a+y_c)/2) \qquad (1)$$

Then, a measured value (${}_\emptyset\rho_n$, ${}_\emptyset\theta_n$) (n=1:2:3 ··· N) at the geometric center $O_\emptyset$ is obtained by the arithmetic control circuit 600. It is also possible that based on the values of $x_\emptyset$ and $y_\emptyset$, the X-axis motor 206 and the Y-axis motor 224 are activated to move the frame holding apparatus unit 100 which is sandwiched between the hands 211 and 212 so that the geometric center $O_\emptyset$ of the lens rim 501 is coincident with the rotational center O of the sensor arm 302, and then the lens rim shape is re-measured to obtain a measured value (${}_\emptyset\rho_n$, ${}_\emptyset\theta_n$) at the geometric center $O_a$.

(Instrumental Measurement of Data $Z_n$ in the Z-axis Direction with respect to Radius Vector Information ($\rho_n$, $\theta_n$))

When the lens rim shape is instrumentally measured based on the above-mentioned geometric center $O_\emptyset$, the amount of movement of the sensor head 312 in the Z-axis direction is simultaneously instrumentally measured. By doing this, three-dimensional information is eventually obtained with respect to the lens rim shape (${}_\emptyset\rho_n$, ${}_\emptyset\theta_n$, $Z_n$) (n=1, 2, 3 ···).

In the above-mentioned instrumental measurement of the radius vector of the lens rim 501, if the V-edge feeler 356 is accidentally escaped from the lens rim 501 during the course of instrumental measurement, the instrumentally measured data of the radius vector shows a significant disagreement with the data which was instrumentally measured immediately before. Therefore, a radius variation range $\underline{a}$ is preliminarily determined, so that the sensor arm portion 302 is stopped rotation when the instrumentally measured data of the radius vector is not within the range. At the same time, the electromagnet 318 of the spring apparatus 315 of Fig. 6 is excited to draw the collar 321.

As a result, since the spiral spring 316 is sandwiched between the clutch plates 324 and 325 so as to be prohibited from exhibiting its function for winding, it can be prevented that the spectacle frame 500 is damaged by the arm 355 of the sensor head portion 312 caught by the lens rim. After the escape of the feeler 356, the spectacle frame 500 is returned to the initial instrumental measuring position so that an instrumental measurement is performed again.

Fig. 11 shows a construction of the template holding member 110 for instrumentally measuring the shape of a template 510 formed by copying the lens rim 501 of the spectacle frame 500. The template holding member 110 comprises an arm portion 111, cylindrical supporting columns 112 and 113 mounted on opposite end portions of the arm portion 111, and a holding post 120 mounted on the center of the arm portion 111. A large pins 116 is implanted in a foremost end face of the holding post 120, and tiny pins 114 and 115 are implanted in the end face but on both sides of the large pin 116. The template 510 is attached to the holding post 120 by these pins 114 to 116.

In the template holding member 110, the supporting columns 112 and 113 are sandwiched between the hands 211 and 212. When the hands 211 and 212 are descended to the instrumentally measuring position, the template 510 is located in the same plane as the template abutting surface 354. The template abutting surface 354 is brought into abutment with a side surface of the template 510 in accordance with the movements of the hands 211 and 211, and its radius vector ($t\rho_n$:$t\theta_n$) is measured with reference to the rotation of the sensor arm 302.

Fig. 12 shows a block diagram of an arithmetic control circuit of a frame shape measuring apparatus according to the present invention. The driver circuits 601 to 604 are connected respectively to the X-axis motor 206, the Y-axis motor 224, the sensor arm rotary motor 301, and the guide shaft rotary motor 209. The driver circuits 601 to 604 are operated to control the rotational driving of the respective pulse motors in accordance with the pulse number which is supplied from a pulse generator 609 under the control of a sequence control circuit 610.

The amount of movement of the reading head 313 is counted by a reading output counter 605 and inputted in a comparative circuit 606.

The comparative circuit 606 is operated to compare a signal corresponding to the radius variation range a from a reference value generation circuit 607 with an amount of variation of the counted value from the counter 605. And when the counted value is within the range a, the comparative circuit 606 is operated to convert the counted value $\rho_n$ of the counter 605 and the pulse number from the pulse generator 609 into an angle of rotation of the sensor arm 355 and input the ($\rho_n$, $\theta_n$) into a data memory 611 as a set of the counted value $\rho_n$ and the converted value $\theta_n$ so as to be stored therein.

(Instrumental Measurement of Data $Z_n$ in the Z-axis Direction with respect to Radius Vector Information ($\rho_n$, $\theta_n$))

Next, the sequence control circuit 610 is operated to switch the gate circuit 612 to the arithmetic circuit 613 side so that the arithmetic circuit 613 calculates the geometric center O0 of the lens rim 501 based on the radius vector ($\rho_n$, $\theta_n$) stored in the data memory 611 and such obtained data is inputted in the sequence control circuit 610. The sequence control circuit 610 is operated to obtain $x_\emptyset$, $Y_\emptyset$ from the above-mentioned equation (1) based on the data from the arithmetic circuit 618, activate the motors 206 and 224 inputting the pulse number required into the driver circuits 601 and 608, and coincide the center of the lens frame 500 with the center of rotation of the sensor arm 302.

At the same time, the sequence control circuit 610 instructs the counter circuit 615 to count the data from the Z-axis sensor 358.

And the lens rim shape information (${}_\emptyset\rho_n$, ${}_\emptyset\theta_n$, $z_n$) including the Z-axis direction data is instrumentally measured and such obtained data is stored in the data memory 611. Here, if the counted value $\rho_n$ or ${}_\emptyset\rho_n$ from the counter 605 is larger than the radius vector variation range a which is outputted from the reference value generation circuit 607, the comparator circuit 606 outputs information to that effect to the sequence control circuit 610 which, in turn, activates the driver circuit 608 so that the electromagnet 318 of the spring apparatus 315 is excited to prevent the movement of the feeler 336 and to stop the supply of pulse to the driver circuit 604 in order to prevent rotation of the motor 301.

As shown in Figs. 7 and 14, in such preliminary measurement, since the lens frame 501 is inclined, the center line 503 of the V-shaped groove 502 is inclined by $\theta$ at upper and lower ends of the lens rim 501. Because of this, the feeler 356 cannot be brought into abutment with the bottom portion of the V-shaped groove 502 of the lens rim 501 and is held in contact with one of the inclination surfaces 502a and 502b.

As a result, in the preliminary measurement, a distance d ($d \neq c=(a^2+b^2)^{1/2}$) between the upper and lower portions of the V-shaped groove 502 of the lens rim 501 cannot be measured correctly, and a measurement c, which is smaller by $2\Delta$ d, is actually measured (instrumentally measured). Because of this, in order to obviate the error, the arithmetic control circuit 600 obtains the angle $\theta$ of inclination in Step 1. If the angle $\theta$ of inclination is equal to a predetermined angle $\beta$ or more, the arithmetic control circuit 600 amends the inclination angle $\theta$ in Step 3 and correctly measures in Step 4.

Based on the minimum one ($h_{min}$) and the maximum one ($h_{max}$) of the height $z_n$ from the reference measuring surface SO among such obtained lens rim shape information (${}_\emptyset\rho_n$, ${}_\emptyset\theta_n$, $z_n$), the arithmetic control circuit 600 obtains the inclination (frame inclination) angle $\theta$ of the lens rim 502 of Figs. 7 and 14, that is, angle $\theta$ with respect to the reference measuring surface SO of the center line 503 connecting the $h_{min}$ and $h_{max}$ of the V-shaped groove 502.

Here, if the amount of movement of the feeler 356 in the lateral direction is represented by a and the amount of movement of the feeler 356 in the z-direction, by b, respectively, the inclination angle θ can be obtained from $\tan\theta = b/a$. After obtaining the inclination angle θ, the program proceeds to Step 2. Step 2

In this Step 2, it is judged whether or not the inclination angle θ , which was obtained in Step 1, is equal to the Predetermined angle β (for example, 5° ) or more. If the judgment result is that the inclination angle θ is less than the predetermined angle β, the program proceeds to Step 5 skipping the procedures in Steps 3 and 4. In contrast, if the inclination angle θ is equal to the predetermined angle β or more, the program proceeds to Step 3 where the inclination is amended. The arithmetic control circuit 600 skips the procedure of this Step and proceeds to Step 5 when the inclination angle β is equal to a prescribed amount such as, for example, 5° or less. In that case, the lens rim shape information ($_\emptyset\rho_n$, $_\emptyset\theta_n$, $z_n$) is stored and the judgment in Step 5 is made.

Step 3

[V-shaped Groove Inclination Adjustment (Inclination Amendment)]

Next, the arithmetic control circuit 600 drives the motor 209 to rotate the guide shaft 208, such that the frame holding apparatus 100 and the spectacle frame 500 is rotated downwardly by the angle θ in unison with the hands 211 and 212 and then stopped there. In that position, the center line 503 of the lens rim 501 of the spectacle frame 500 is in parallel with a plane including the apex of the feeler 356 as shown in Fig. 15. And d and a of Fig. 14 are equal, in other words, d=a, in Fig. 15.

Step 4

[Regular Measurement]

In Step 4, in the arithmetic control circuit 600, a new lens rim shape information ($_\emptyset\rho_n$, $_\emptyset\theta_n$, $z_n$) is measured by the feeler 356 in the same manner as in Step 1, after the amendment of inclination is finished. At this time of measurement, since the feeler 356 is generally coincident with the V-shaped groove 502 and the apex of the feeler 356 is brought into engagement with the bottom portion of the V-shaped groove 502, the distance d of the V-shaped groove 502 of the lens rim 501 can be measured correctly.

Such obtained new lens rim shape information ($_\emptyset\rho_n$, $_\emptyset\theta_n$, $z_n$) is stored in the data memory 611.

In this embodiment, the lens rim shape is measured by amending only the frame inclination of the lens rim 502. However, it is also possible that the inclinations of the center line at all points in the V-shaped groove 503 of the lens rim 502 are gradually horizontally amended in the manner as mentioned and the coordinates at those points are measured thereby to measure the frame shape. It is also acceptable that based on a preinputted eccentric information, which is a difference between the geometric center $O_\emptyset$ of the lens rim 501 and the rotation center O of the sensor arm 302, the rotation center O of the sensor arm 302 is measured. After the completion of this measurement, the program proceeds to Step 5.

Step 5

In Step 5, it is judged whether or not the measurements made in Steps 1 to 4 are for the other eye. If the judgment result is negative, the program proceeds to Step 1 where the measuring procedures of from Steps 1 to 4 are executed. In contrast, if the judgment result is affirmative, the measurement is finished.

[Supply of Data to Grinder, etc.]

The lens rim shape information ($_\emptyset\rho_n$, $_\emptyset\theta_n$, $z_n$) such obtained and such stored in the data memory 611 is supplied, for example, to a digital grinder or templating machine which is disclosed in Japanese Patent Application No. Sho 58-225197 filed by the present applicant or a judgment apparatus for judging whether or not a frame shape is machined in accordance with a prescribed value, by switching the gate circuit 612 in accordance with necessity.

A curved value c of the lens rim can be obtained from the $Z_n$ information of the lens rim shape information ($_\emptyset\rho_n$, $_\emptyset\theta_n$, $z_n$) stored in the data memory 611 by the arithmetic circuit 613 in accordance with necessity.

In this calculation, the radius of curvature R of a spherical body SP including the V-edge locus of the lens rim 501 is obtained from the following equation,

$$R^2 = \rho_{1A}^2 + (Z_\emptyset - Z_A)^2$$
$$R^2 = \rho_{1B}^2 + (Z_\emptyset - Z_B)^2 \quad (2)$$

with reference to the radius vector $\rho_{1A}$, $\rho_{1B}$ of at least two points on the lens rim and the moved value $Z_A$, $Z_B$ of the sensor head in the Z-axis direction at those two points as shown in Figs. 13(A) and 13(B). Then, the curved value c of the V-edge is obtained from the following equation,

$$C = \{(n - 1)/R\} \times 1000 \quad (3)$$

(where n is a constant and n=1.523)

based on such obtained curved value c of the V-edge.

The sequence control circuit executes the above-mentioned instrumental measurement Steps in accordance with a program contained in a program memory 614.

As shown in Fig. 16, a finished size of the lens L, which has been machined in accordance with the data obtained as a result of the completion of the procedures of Steps 1 to 3, is machined generally equal to the size d of Fig. 14. For the sake of convenience of explanation, Fig. 16 shows the finished size of the lens L in a way slightly different from the true size d of the lens.

Actually, however, the finished size of the lens L is almost equal to the true size d of the lens as shown in Fig. 15.

Since the present invention is constructed in the manner as detailed above, the shape of a curved spectacle frame can be measured correctly.

Industrial Applicability

As described in the foregoing, a frame shape measuring apparatus according to the present invention is useful for obtaining data necessary for grinding a lens with a grinder so that the lens will have an identical shape with that of a lens rim of the spectacle frame.

## Claims

**1.** A frame shape measuring apparatus comprising :

- an apparatus body (201) including a reference measuring surface (SO) ;
- frame holding means (100) held by said apparatus body (201) such that a lens rim (501) of a spectacle frame (500) can be held by said frame holding means (100) and a holding surface (156b) of said lens rim (501) can be inclined relative to said reference measuring surface (SO) ;
- drivingly rotating means (209) for rotating said frame holding means (100) so as to be inclined ;
- measuring means (300) for measuring coordinates at various points in a peripheral direction of a V-shaped groove (502) formed in said lens rim (501) relative to said reference measuring surface (SO) ; and
- a control circuit (600) responsive to results of measurement supplied by said measuring means (300) ;

characterized in that :

- the frame holding means (100) are adapted to hold simultaneously a pair of lens rims (501) ;
- the control circuit (600) is an arithmetic control circuit for calculating a V-shaped groove inclination amount of said lens rim (501) relative to said reference measuring surface (SO) based on said result of measurement obtained by said measuring means (300) ;
- said arithmetic control circuit (600) being adapted to drivingly control said drivingly rotating means (209) in response to said result of measurement obtained by said measuring means (300), to rotate frame holding means (100) such that the line connecting the centres of the V-shaped groove at opposing measuring positions on the rim is made parallel to said reference measuring surface, so that the coordinates at said various points of said V-shaped groove are gradually measured by said measuring means (300), and the shape of said spectacle frame (500) is calculated based on said result of measurement.

**2.** A frame shape measuring apparatus according to claim 1, wherein the control circuit (600) is adapted to rotate the frame holding means (100) when the inclination angle of said line with respect to the reference surface (SO), calculated from said result of measurement is greater than a minimum value.

## Patentansprüche

**1.** Gestellform-Meßgerät, welches aufweist:

- einen Gerätekörper (201), der eine Bezugsmeßfläche (SO) enthält;
- eine Gestellhaltevorrichtung (100), welche derart von dem Gerätekörper (201) gehalten wird, daß ein Linsenrand (501) eines Brillengestells (500) durch die Gestellhaltevorrichtung (100) gehalten werden kann und eine Haltefläche (156b) des Linsenrandes (501) relativ zu der Bezugsmeßfläche (SO) geneigt werden kann;
- eine Drehantriebsvorrichtung (209) zum Drehen der Gestellhaltevorrichtung (100) derart, daß diese geneigt wird;
- eine Meßvorrichtung (300) zum Messen von Koordinaten an verschiedenen Punkten in einer Umfangsrichtung einer V-förmigen Nut (502), welche in dem Linsenrand (501) gebildet ist, relativ zu der Bezugsmeßfläche (FO) ;
- eine Steuerschaltung (600), welche auf von der Meßvorrichtung (300) gelieferte Meßergebnisse anspricht;

dadurch gekennzeichnet daß

- die Gestellhaltevorrichtung (100) so angepaßt ist, daß sie gleichzeitig ein Paar von Linsenrändern (501) hält;
- die Steuerschaltung (600) eine arithmetische Steuerschaltung ist zum Berechnen einer Neigungsgröße der V-förmigen Nut des Linsenrandes (501) relativ zu der Bezugsmeßfläche (SO) auf der Grundlage des von der Meßvorrichtung (300) erhaltenen Meßergebnisses;

- die arithmetische Steuerschaltung (600) angepaßt ist zur Antriebssteuerung der Drehantriebsvorrichtung (209) in Abhängigkeit von dem von der Meßvorrichtung (300) erhaltenen Meßergebnis, um die Gestellhaltevorrichtung (100) derart zu drehen, daß die die Mitten der V-förmigen Nut an entgegengesetzten Meßpositionen auf dem Rand verbindende Linie parallel zu der Bezugsmeßfläche gemacht wird, derart, daß die Koordinaten an den verschiedenen Punkten der V-förmigen Nut fortschreitend von der Meßvorrichtung (300) gemessen werden, und die Form des Brillengestells (500) auf der Grundlage des Meßergebnisses berechnet wird.

**2.** Gestellform - Meßgerät nach Anspruch 1, worin die Steuerschaltung (600) angepaßt ist, um die Gestellhaltevorrichtung (100) zu drehen, wenn der Neigungswinkel der Linie mit Bezug auf die Bezugsfläche (SO), berechnet aus dem Meßergebnis, größer ist als ein minimaler wert.

## Revendications

**1.** Instrument de mesure de forme de monture comprenant :

- un corps d'instrument (201) comportant une surface de mesure de référence (SO) ;
- des moyens de maintien de monture (100) maintenus par ledit corps d'instrument (201), de façon qu'un bord de verre (501) d'une monture de lunettes (500) puisse être maintenu par lesdits moyens de maintien de monture (100) et qu'une surface de maintien (156b) dudit bord de verre (501) puisse être inclinée par rapport à ladite surface de mesure de référence (SO) ;
- des moyens d'entraînement en rotation (209) pour faire tourner lesdits moyens de maintien de monture (100) de façon à être inclinés ;
- des moyens de mesure (300) pour mesurer des coordonnées en divers points dans une direction périphérique d'une gorge en forme de V (502) formée dans ledit bord de verre (501) par rapport à ladite surface de mesure de référence (SO) ; et
- un circuit de commande (600) sensible à des résultats de mesures délivrés par lesdits moyens de mesure (300) ;

caractérisé en ce que :

- les moyens de maintien de monture (100) sont prévus pour maintenir simultanément deux bords de verres (501) ;
- le circuit de commande (600) est un circuit de commande arithmétique destiné à calculer une valeur d'inclinaison de gorge en forme de V dudit bord de verre (501) par rapport à ladite surface de mesure de référence (SO), sur la base dudit résultat de mesure obtenu par lesdits moyens de mesure (300) ;
- ledit circuit de commande arithmétique (600) étant prévu pour commander l'entraînement desdits moyens d'entraînement en rotation (209) en réponse audit résultat de mesure obtenu par lesdits moyens de mesure (300), pour faire tourner les moyens de maintien de monture (100) afin que la ligne reliant les centres de la gorge en forme de V dans des positions de mesure opposées sur le bord soit rendue parallèle à ladite surface de mesure de référence, de façon que les coordonnées auxdits divers points de ladite gorge en forme de V soient mesurées progressivement par lesdits moyens de mesure (300) et que la forme de ladite monture de lunettes (500) soit calculée sur la base dudit résultat de mesure.

**2.** Instrument de mesure de forme de monture selon la revendication 1, dans lequel le circuit de commande (600) est prévu pour faire tourner les moyens de maintien de monture (100) lorsque l'angle d'inclinaison de ladite ligne par rapport à la surface de référence (SO), calculé d'après ledit résultat de mesure, est supérieur à une valeur minimale.

FIG. 1

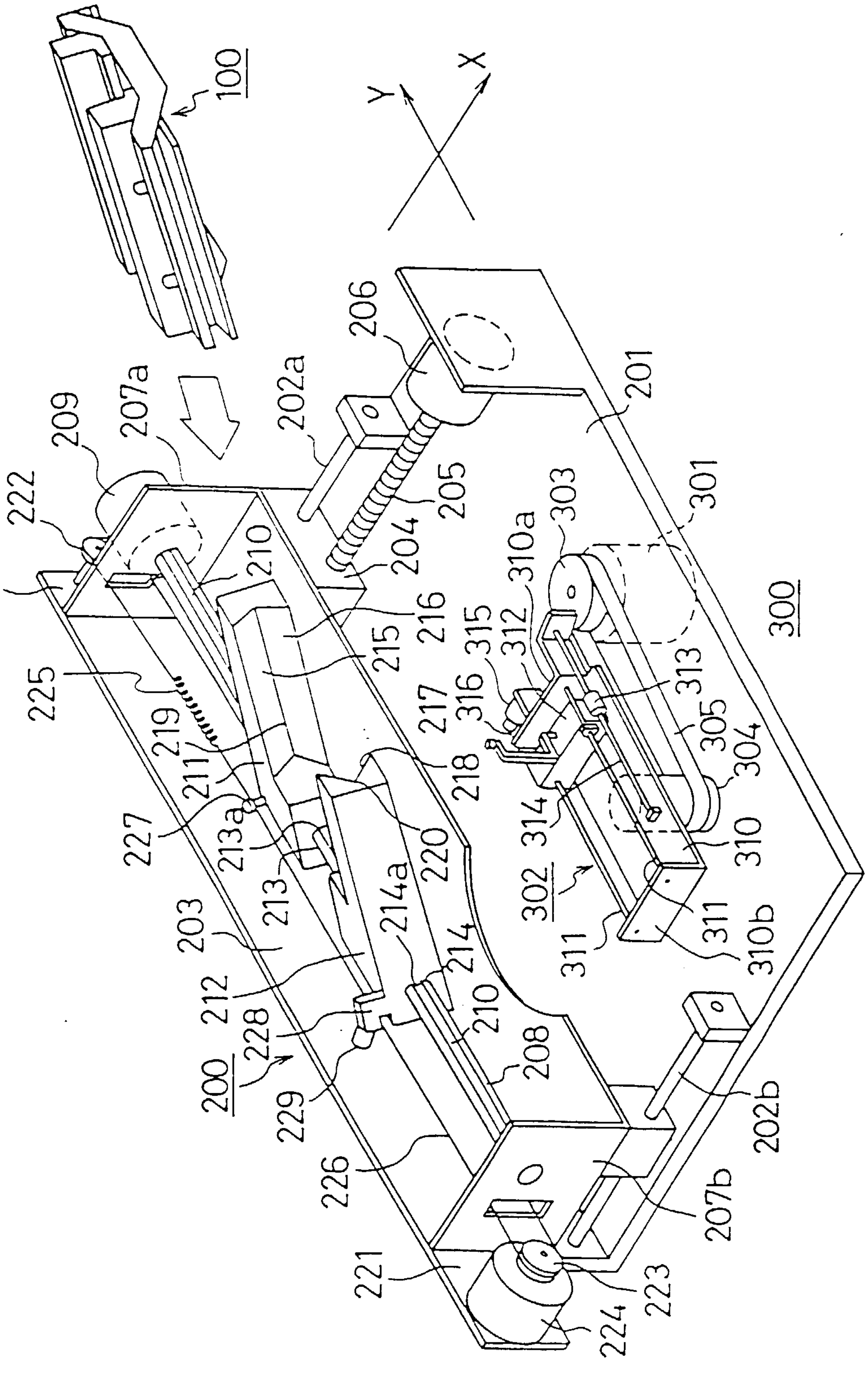
100
Y
X
206
201
202a
207a
209
205
222
204
301
303
221
210
310a
216
300
215
312
315
225
313
316
217
305
219
211
218
304
227
314
213a
220
310
302
213
311
203
214a
214
311
310b
212
210
228
208
200
229
202b
226
207b
221
223
224

FIG. 2

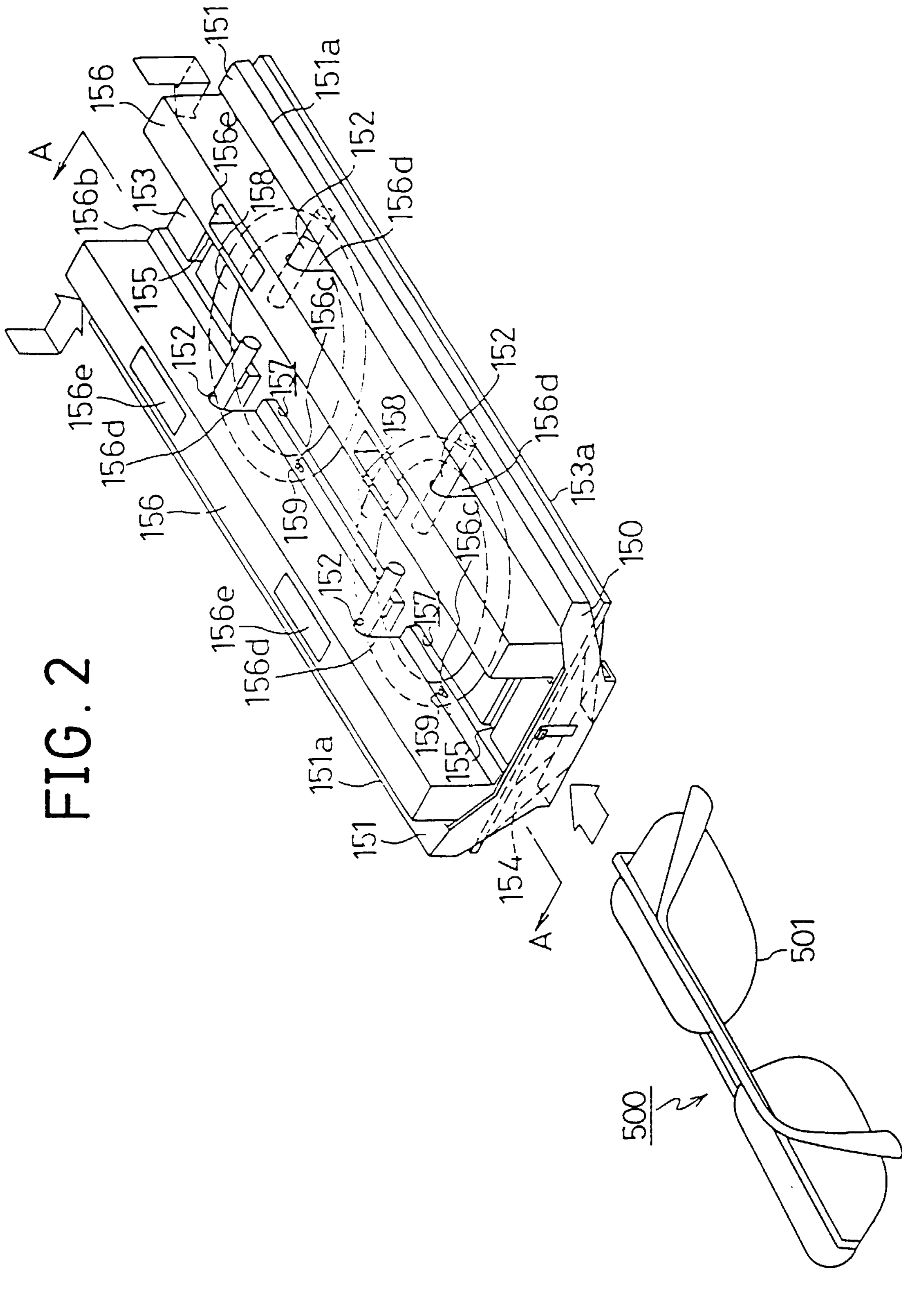

FIG.3

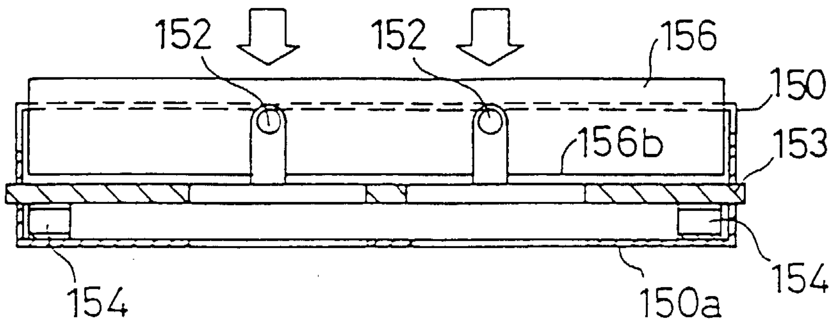
152
152
156
150
156b
153
154
154
150a

FIG.4

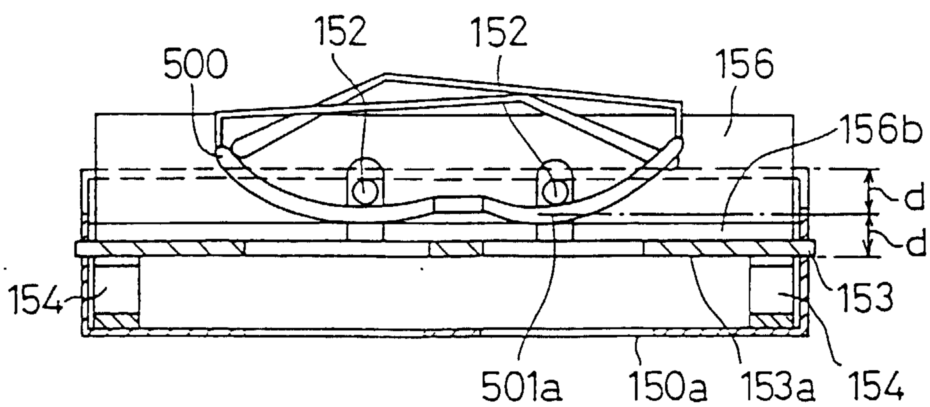
152
152
500
156
156b
d
d
154
153
501a
150a
153a
154

FIG. 5

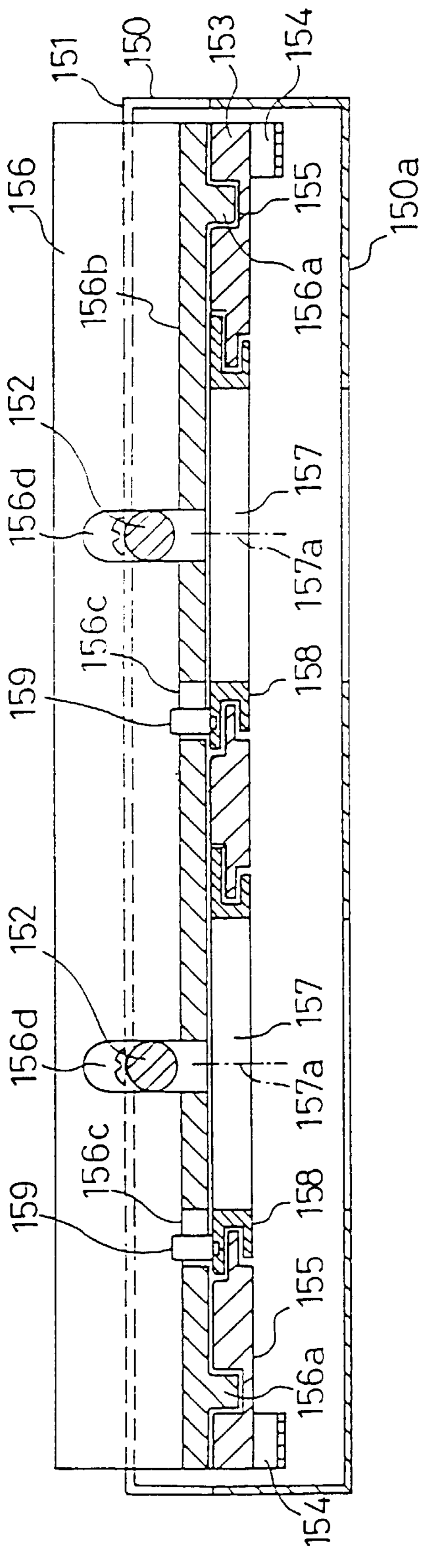
151
150
153
154
156
155
150a
156b
156a
152
156d
157
157a
156c
158
159
152
156d
157
157a
156c
158
159
155
156a
154

FIG.6

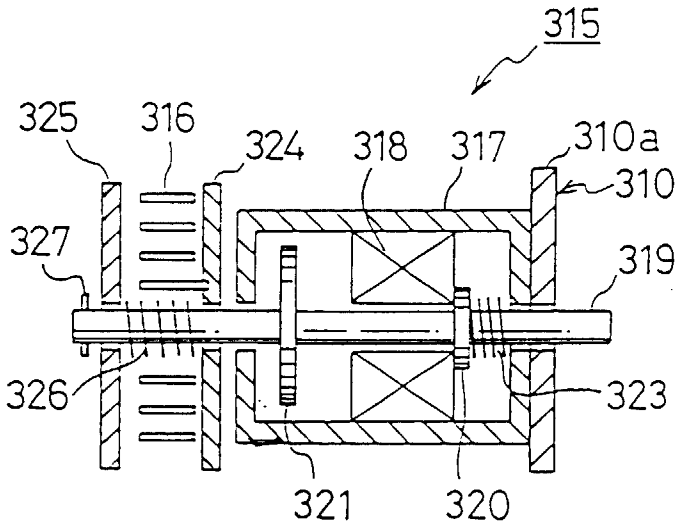

FIG.7

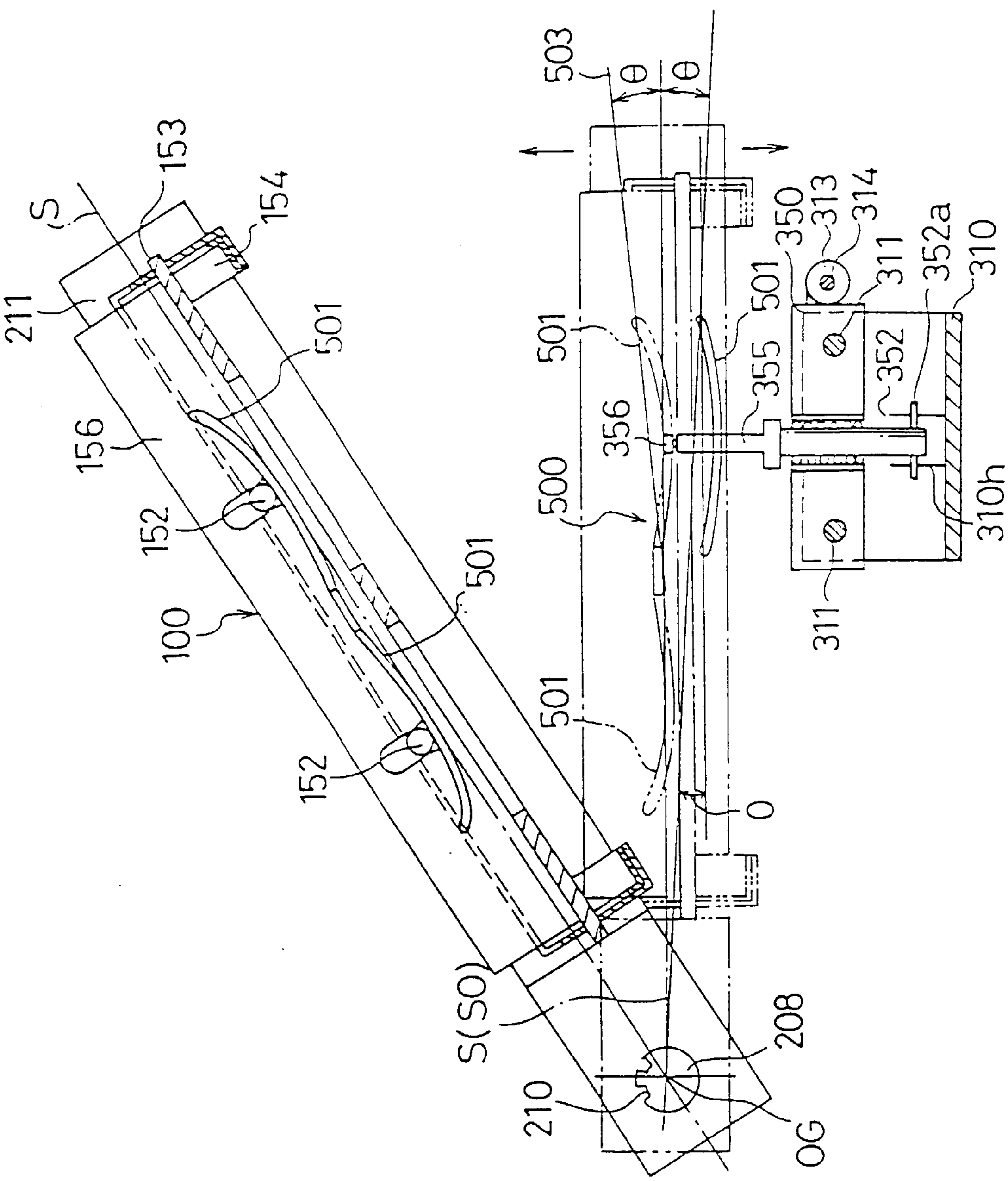

S
153
154
211
501
156
152
100
501
152
S(SO)
210
208
OG
503
θ
θ
350
313
314
311
352a
310
501
501
355
352
356
500
310h
311
501
0

FIG. 8

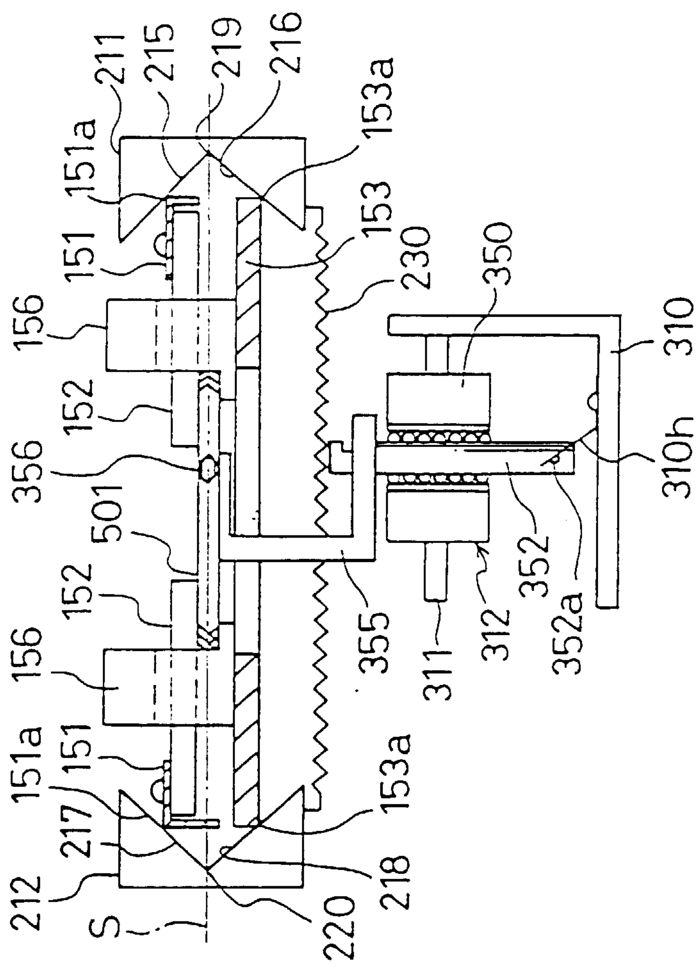

211
215
219
216
153a
151a
151
153
230
350
156
310
152
310h
356
501
352
152
355
312
352a
156
311
151a
151
153a
217
212
218
S
220

FIG. 9

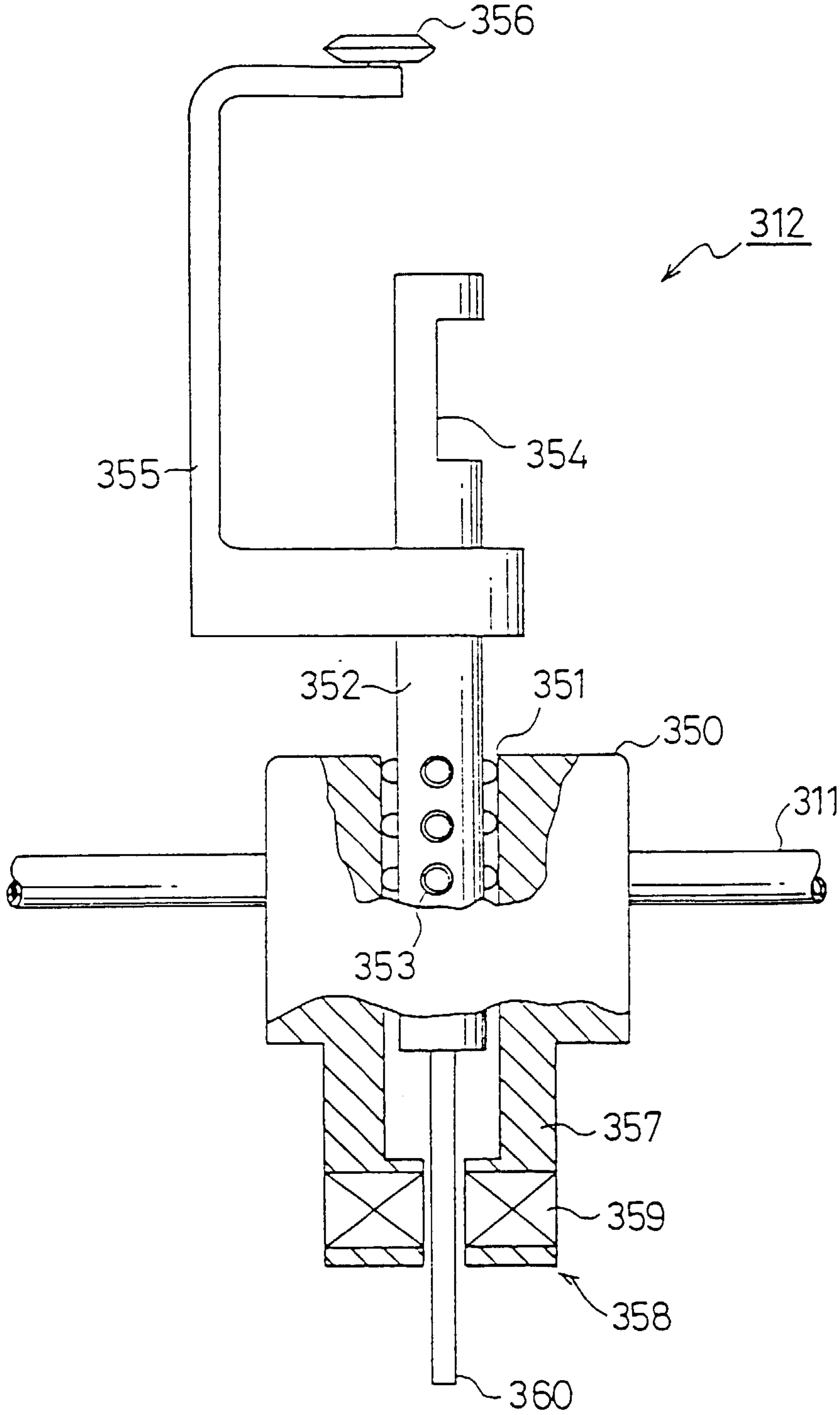

FIG.10

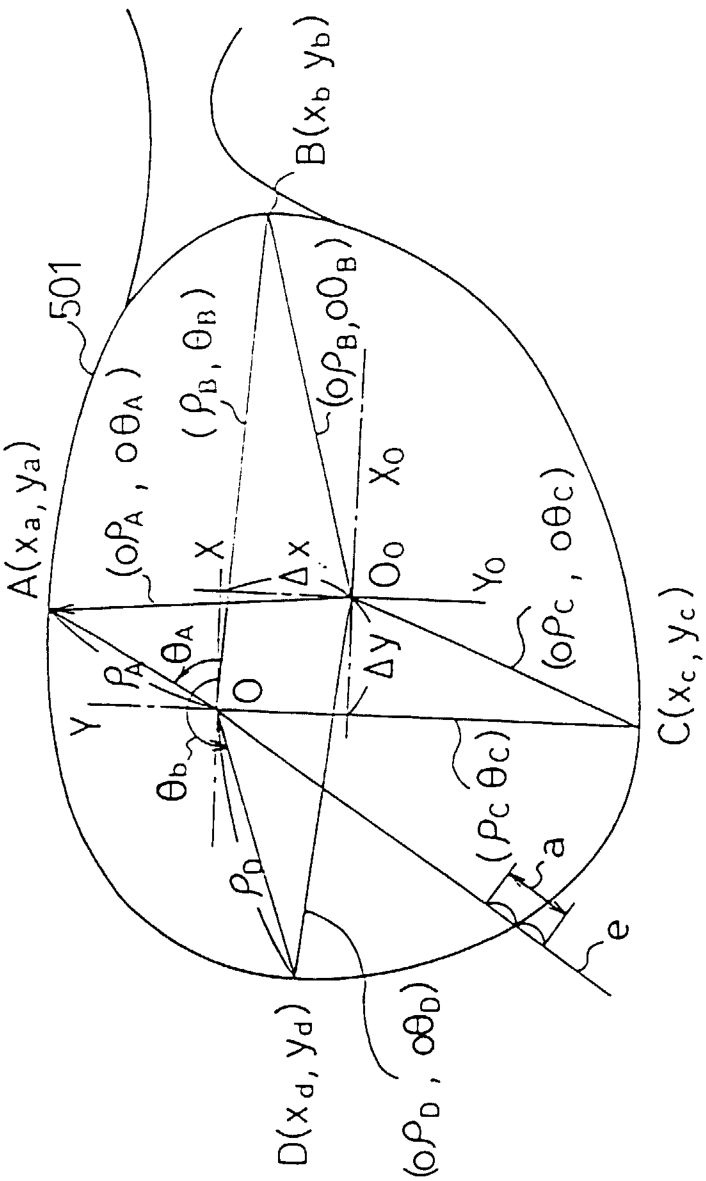
A(xa, ya)
B(xb yb)
C(xc, yc)
D(xd, yd)
501
(oρA , oθA )
(ρB , θB )
(oρB, oθB )
(oρC , oθC)
(ρC θC)
(oρD , oθD)
X
Y
X0
Y0
O
O0
Δx
Δy
θA
θb
ρA
ρD
a
e

FIG.11

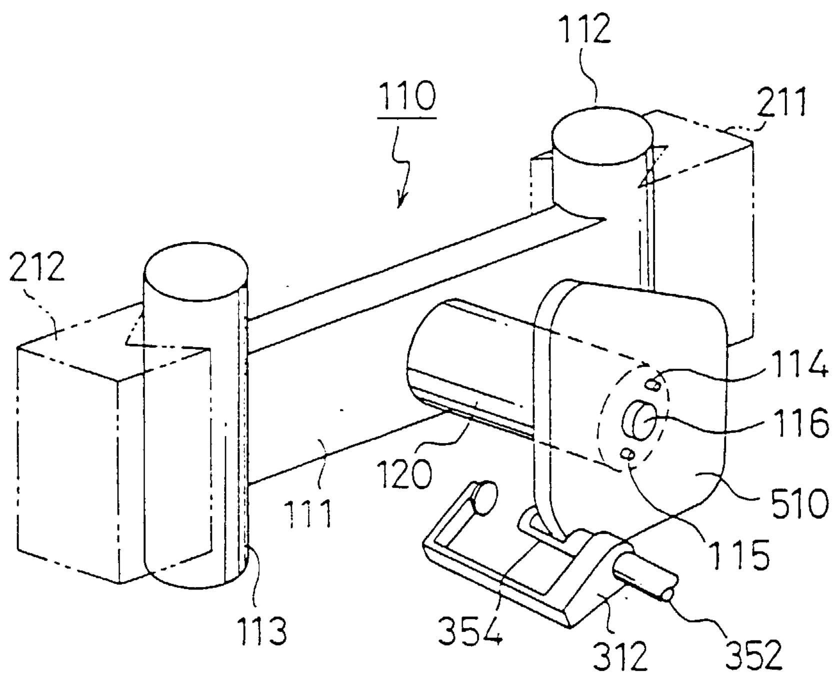

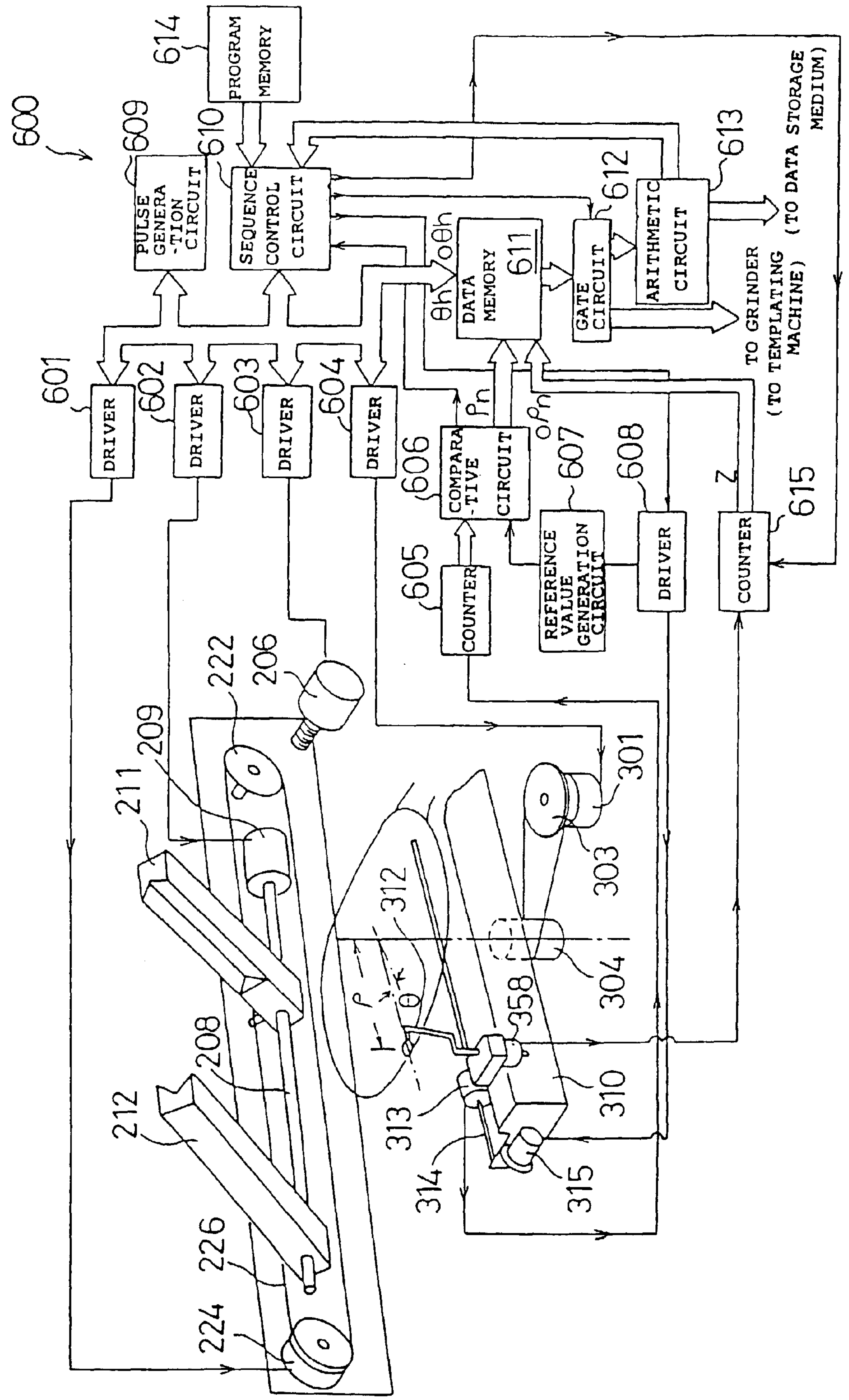
600
PROGRAM MEMORY
614
PULSE GENERA-TION CIRCUIT
609
SEQUENCE CONTROL CIRCUIT
610
DATA MEMORY
611
GATE CIRCUIT
612
ARITHMETIC CIRCUIT
613
(TO DATA STORAGE MEDIUM)
TO GRINDER (TO TEMPLATING MACHINE)
θh
oθh
ρn
oρn
DRIVER
601
DRIVER
602
DRIVER
603
DRIVER
604
COMPARA-TIVE CIRCUIT
606
REFERENCE VALUE GENERATION CIRCUIT
607
DRIVER
608
COUNTER
605
COUNTER
615
Z
206
222
209
211
208
212
226
224
301
303
304
312
ρ
θ
358
310
313
314
315

FIG.12

FIG.13

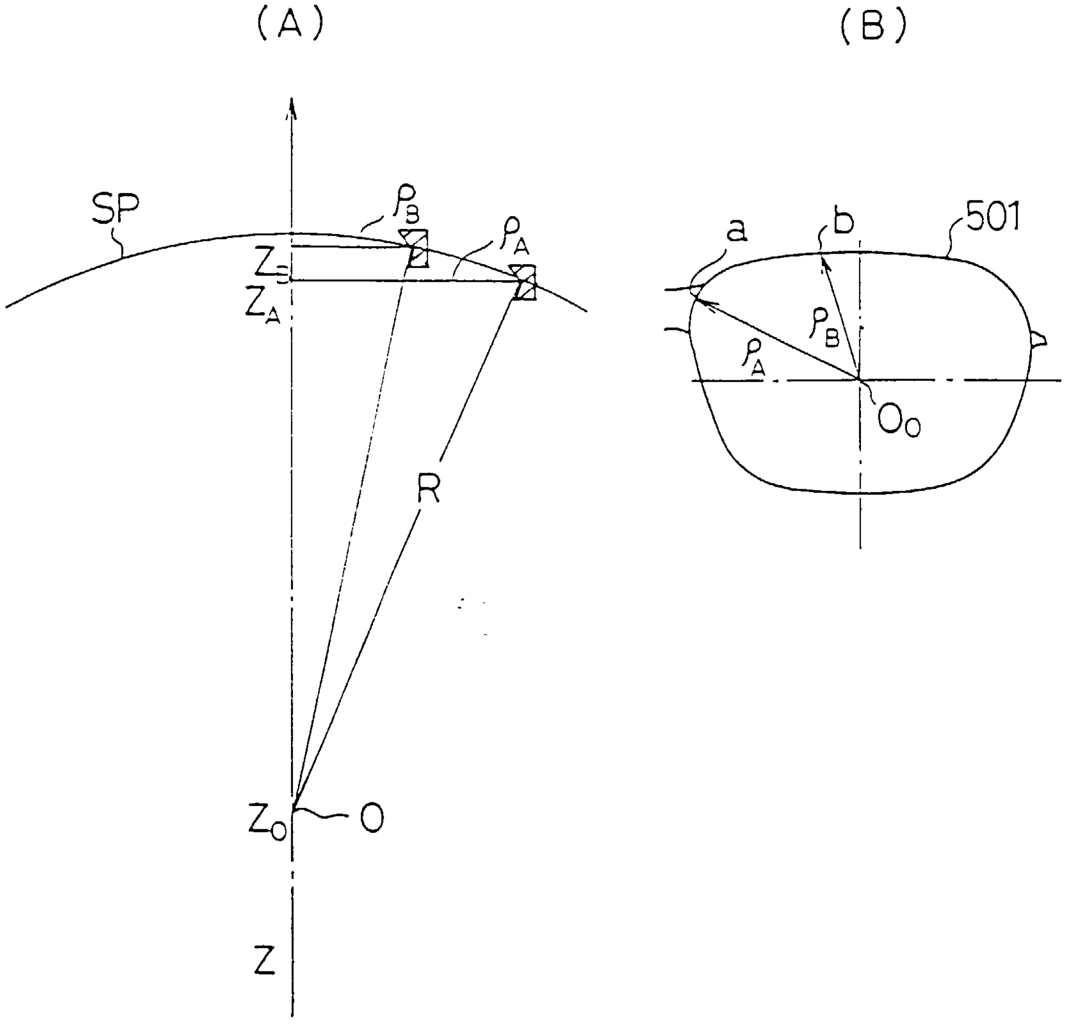

FIG.14

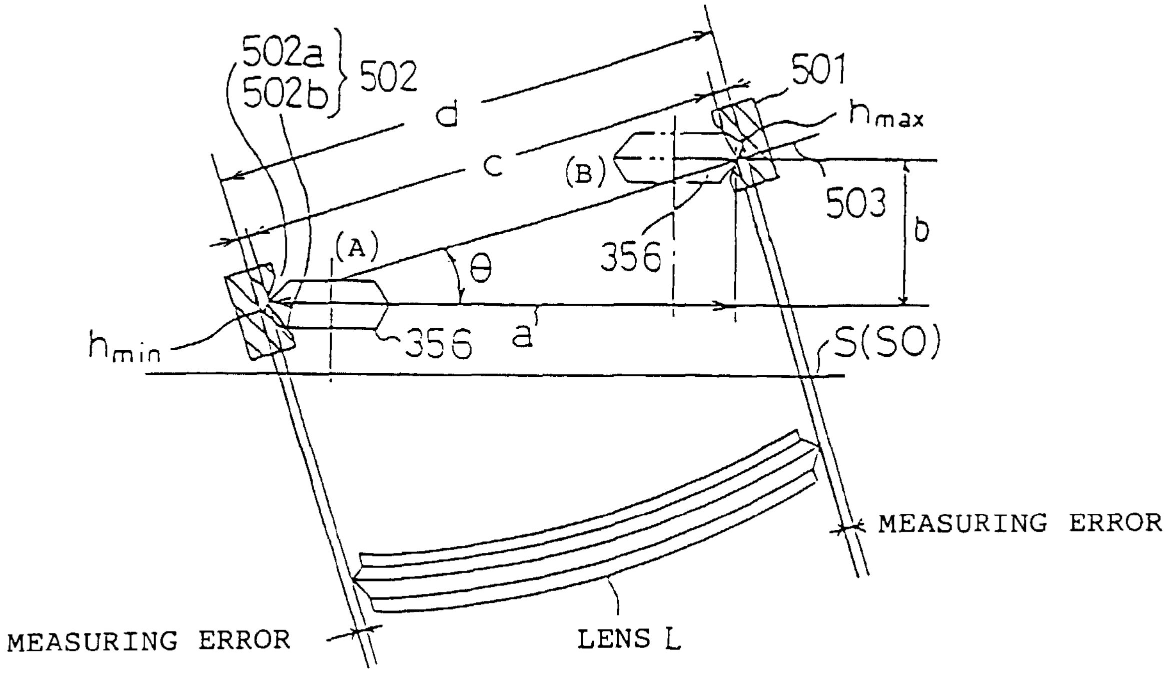
502a
502b
502
d
501
$h_{max}$
c
(B)
503
b
(A)
θ
356
$h_{min}$
356
a
S(SO)
MEASURING ERROR
MEASURING ERROR
LENS L

FIG.15

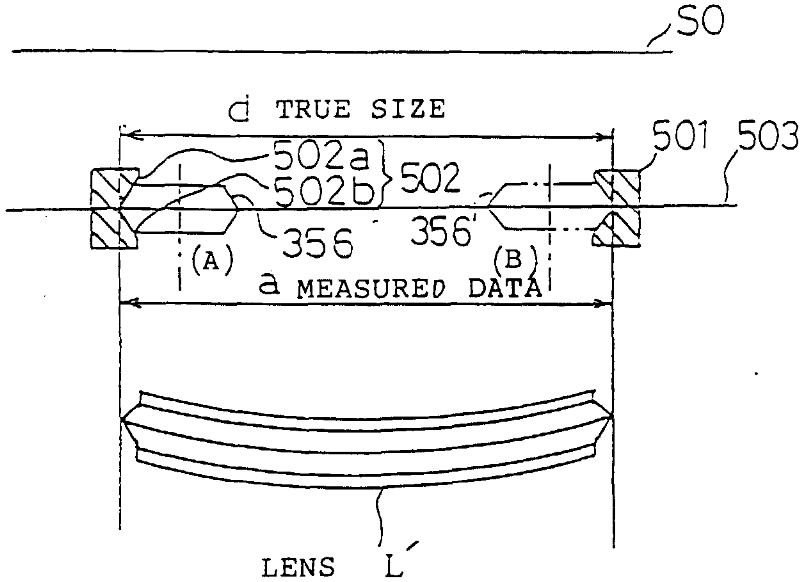
SO
d TRUE SIZE
502a
502b
502
501
503
356
356'
(A)
(B)
a MEASURED DATA
LENS L'

FIG.16

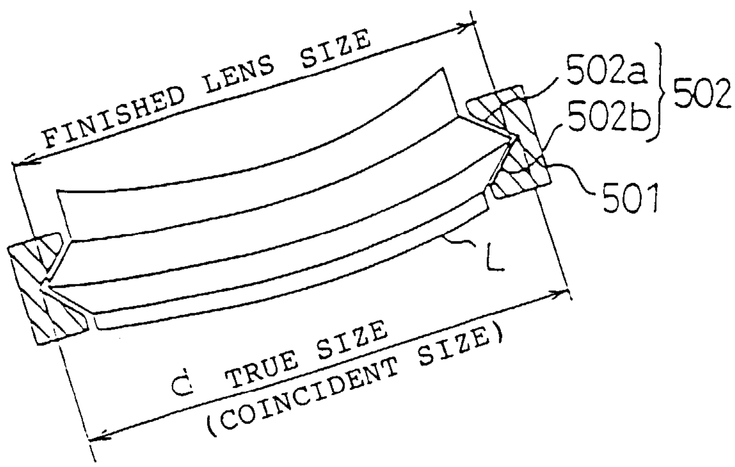

FINISHED LENS SIZE
502a
502b
502
501
L
d TRUE SIZE
(COINCIDENT SIZE)

FIG.17

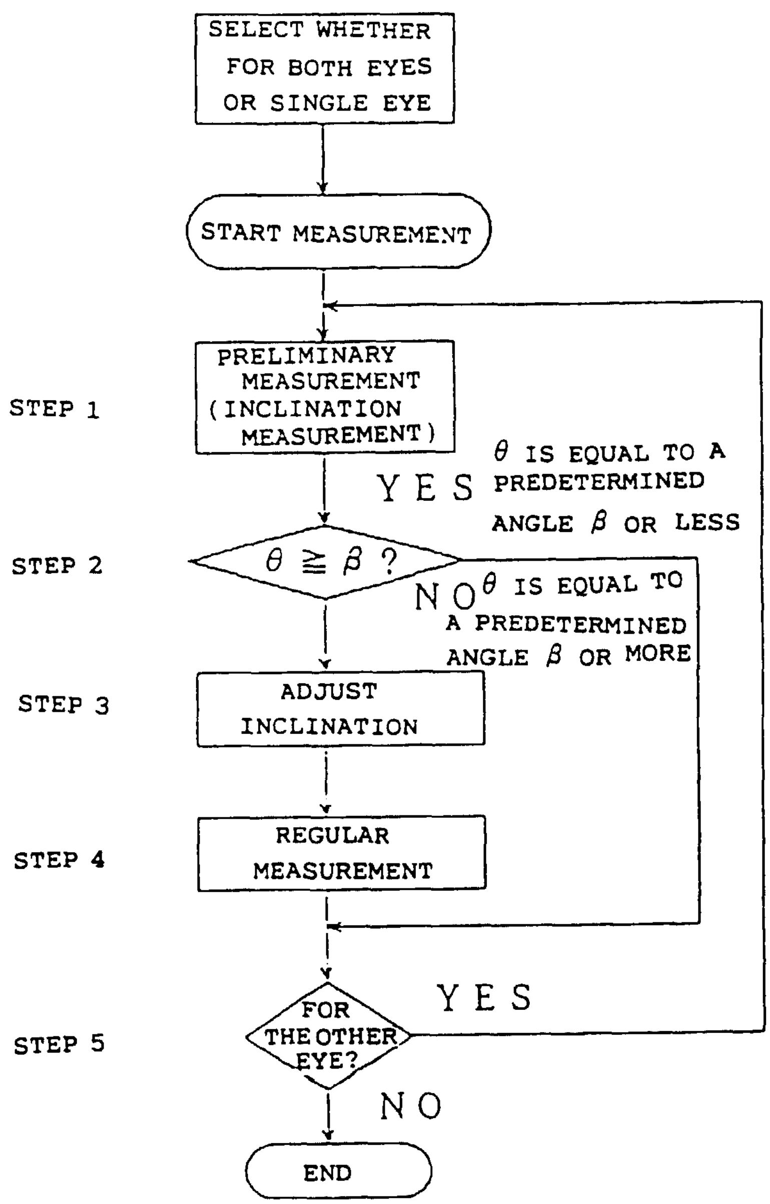
SELECT WHETHER FOR BOTH EYES OR SINGLE EYE
START MEASUREMENT
STEP 1
PRELIMINARY MEASUREMENT (INCLINATION MEASUREMENT)
YES
θ IS EQUAL TO A PREDETERMINED ANGLE β OR LESS
STEP 2
θ ≧ β ?
NO
θ IS EQUAL TO A PREDETERMINED ANGLE β OR MORE
STEP 3
ADJUST INCLINATION
STEP 4
REGULAR MEASUREMENT
STEP 5
FOR THE OTHER EYE?
YES
NO
END

FIG.18

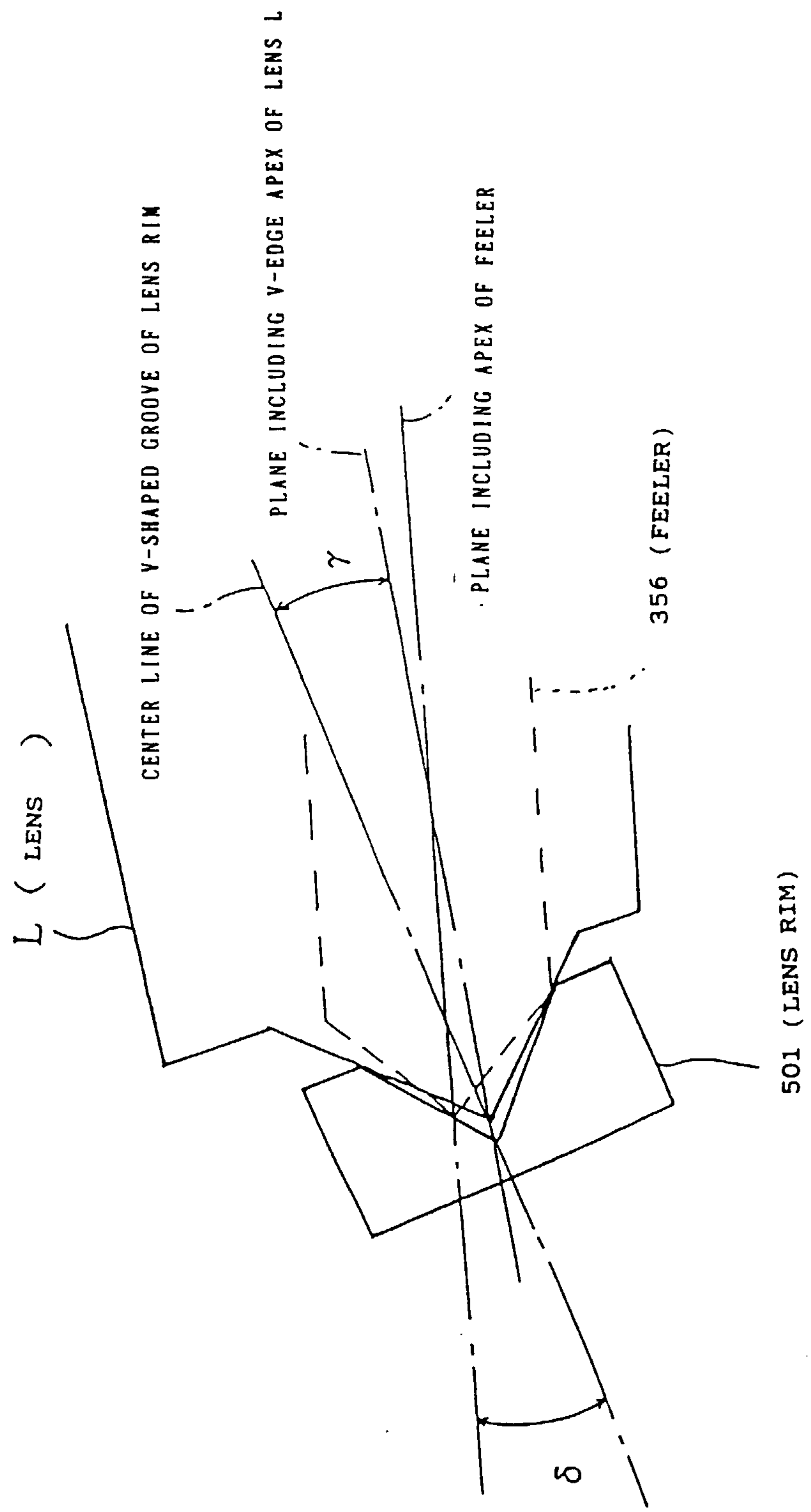
L ( LENS )
CENTER LINE OF V-SHAPED GROOVE OF LENS RIM
PLANE INCLUDING V-EDGE APEX OF LENS L
PLANE INCLUDING APEX OF FEELER
356 (FEELER)
501 (LENS RIM)
γ
δ